# EUROPÄISCHE PATENTANMELDUNG

(11) **EP 4 614 036 A1**
(43) Veröffentlichungstag der Anmeldung: **10.09.2025**
(21) Anmeldenummer: 24162355.2
(22) Anmeldetag: 08.03.2024
(51) Int. Cl.: F16K 3/24, F16K 3/34, F16K 11/04, F16K 11/07, F16K 31/06, H01M 8/04082

(54) **VENTILVORRICHTUNG UND VERFAHREN ZUM BETREIBEN EINER VENTILVORRICHTUNG**

(71) Anmelder: Robert Bosch GmbH, 70442 Stuttgart (DE)
(72) Erfinder: Shanmugam, Jeevanandham, 641016 Coimbatore, Tamilnadu (IN); Bitetto, Stefano, 70026 Modugno Apulien (IT)

(57) **Zusammenfassung**

Die vorliegende Erfindung betrifft eine Ventilvorrichtung (10), beispielsweise für eine Wasserstoffstrahlpumpenvorrichtung in einer Brennstoffzellenanwendung, die einen Hauptkanal (MC) und mindestens einen Bypasskanal (BC) innerhalb eines Ventilkörpers (VB), einen Stößel (TP), und eine Feder (SP), die an einem Ende des Stößels (TP) angeordnet ist, umfasst.

## Beschreibung

Die vorliegende Erfindung betrifft eine Ventilvorrichtung, zum Beispiel für eine Wasserstoffstrahlpumpenvorrichtung (mit einer solchen Ventilvorrichtung) in einer Brennstoffzellenanwendung, und ein Verfahren zum Betreiben einer Ventilvorrichtung, zum Beispiel für eine Wasserstoffstrahlpumpenvorrichtung in einer Brennstoffzellenanwendung.

### Stand der Technik

In Brennstoffzellensystemen ist ein Rezirkulationskreislauf typischerweise mit der Anodenseite der Brennstoffzelle verbunden, wobei ein Wasserstoffgasinjektor (HGI) in dem Wasserstoffzufuhrweg verwendet werden kann. In einigen Konfigurationen macht der Bedarf des Kunden die Verwendung eines weiteren HGI erforderlich, zum Beispiel zur Befüllung eines Bypasskanals mit frischem Wasserstoff direkt aus dem Tank und zur Umleitung zu einer Strahlpumpe in dem Rezirkulationskreislauf. Die Verwendung eines zweiten HGI kann zu einem erhöhten Platzbedarf in dem Wasserstoffzufuhrweg führen.

Dokument DE 10 2020 212 178 A1 beschreibt den Betrieb einer Brennstoffzelle.

### Offenbarung der Erfindung

Die Erfindung betrifft eine Ventilvorrichtung, zum Beispiel für eine Wasserstoffstrahlpumpenvorrichtung in einer Brennstoffzellenanwendung, nach Anspruch 1 und ein Verfahren zum Betreiben einer Ventilvorrichtung, zum Beispiel für eine Wasserstoffstrahlpumpenvorrichtung in einer Brennstoffzellenanwendung, nach Anspruch 8.

Weitere Ausführungsformen sind Gegenstand der abhängigen Ansprüche.

### Vorteile der Erfindung

Die Idee, auf der die Erfindung basiert, betrifft eine Ventilvorrichtung, zum Beispiel für eine Wasserstoffstrahlpumpenvorrichtung, und ein Verfahren zum Betreiben einer Ventilvorrichtung, zum Beispiel für eine Wasserstoffstrahlpumpenvorrichtung in einer Brennstoffzellenanwendung, durch die eine Vereinfachung des Systems und seiner Verwendung hinsichtlich der Versorgung des Ventils mit Energie erreicht wird, da es nur ein elektrisches Ventil statt wie üblich zwei gibt und somit weniger Leistung für die ECU erforderlich ist, und ferner eine Reduzierung der Produktgröße im Kundensystemlayout und auch im Gewicht von ca. 30 % weniger erreicht werden kann sowie auch eine Produktkostenreduzierung aufgrund weniger verwendeter Teilkomponenten erreicht werden kann. Auch mit diesen Verbesserungen kann die Ventilvorrichtung immer noch in der Lage sein, mehrere Funktionen zu erfüllen, die für die Strahlpumpe und/oder das Brennstoffzellensystem erforderlich sind.

Die Erfindung betrifft eine Ventilvorrichtung, zum Beispiel für eine Wasserstoffstrahlpumpenvorrichtung in einer Brennstoffzellenanwendung, die aufweist: einen Hauptkanal und mindestens einen Bypasskanal innerhalb eines Ventilkörpers, sich erstreckend von einer inneren Aussparung in dem Ventilkörper aus, und einen Hauptsitz an einem Eingang zu dem Hauptkanal und einen Bypasssitz an einem Eingang zu dem Bypasskanal von der inneren Aussparung aus oder an einem Gaseinlass in den Ventilkörper, zum Beispiel einem Wasserstoffeinlass, wobei der Hauptsitz und der Bypasssitz an der inneren Aussparung und in einem vordefinierten Abstand zueinander entlang der inneren Aussparung angeordnet sind; einen Stößel, der in die innere Aussparung einführbar ist, und ein Hauptdichtungselement, das an dem Stößel an einer Position angeordnet ist, die dem Hauptsitz zugewandt ist, und dazu ausgelegt ist, den Hauptsitz zu schließen, wenn der Stößel zu dem Hauptsitz gedrückt wird, und mindestens ein Bypassdichtungselement, das an dem Stößel an einer Position angeordnet ist, die dem Bypasssitz zugewandt ist, und dazu ausgelegt ist, den Bypasssitz zu schließen, wenn der Stößel zu dem Bypasssitz gedrückt wird, wobei der Stößel, wenn er in die innere Aussparung eingeführt ist, einen vordefinierten Zwischenraum zwischen dem Stößel und dem Ventilkörper zwischen dem Einlass des Gases (zum Beispiel Wasserstoff) in den Ventilkörper und dem Bypasssitz und/oder zwischen zwei Bypasssitzen bereitstellt; und eine Feder, die an einem Ende des Stößels angeordnet und dazu ausgelegt ist, den Stößel in Richtung des Hauptsitzes zu drücken, und einen Elektromagneten, der dazu ausgelegt ist, den Stößel gegen eine Federkraft in verschiedene Stufen zu ziehen, wenn er mit Energie versorgt wird.

Die Ventilvorrichtung kann somit auch als Ventil mit variabler Betriebsart bezeichnet werden, da die Auslässe/Kanäle aufgrund der verschiedenen Stufen der Energieversorgung des Elektromagneten in verschiedenen Stufen geöffnet oder geschlossen gehalten werden können und die Menge des durch die Kanäle strömenden Wasserstoffs von dem Energieversorgungszustand abhängen kann.

Die Bedienung (Öffnen/Schließen) der Haupt- und Bypasskanäle kann einer HGI (Hydrogen Gas Injection)-Dosierfunktion und gleichzeitig einer weiteren HGI-Dosierfunktion entsprechen.

Da eine Funktion von zwei solchen HGI-Dosierventilen durch die Ventilvorrichtung erreicht werden kann, werden nicht mehrere HGI-Dosierventile benötigt. Somit können die Bedingungen, die mit üblichen Systemen mit zwei HGI-Ventilen einhergehen und die typischerweise zu einer Vergrößerung des Systems in Bezug auf Energiebedarf, Platz und Gewicht (30 % mehr) und Kosten (>45 % aufgrund des zusätzlichen Ventils und der Leitungen) führen können, bei der Ventilvorrichtung gemäß der Erfindung vermieden oder in ihrer Wirkung reduziert werden.

Die innere Aussparung kann sich in einer Längsrichtung des Ventilkörpers und in der Mitte des Ventilkörpers erstrecken. Das Schließen des Haupt- und/oder Bypasssitzes kann einer Abdichtung des Eingangs zu dem entsprechenden Kanal entsprechen, so dass kein, oder nur eine minimale Menge an, Wasserstoff in den Kanal strömt. Der Zwischenraum stellt einen Strömungsweg im Sinne einer Leckage zwischen dem Wasserstoffeinlass und dem Bypasskanal entlang des Raums zwischen dem Stößel und dem Ventilkörper bereit, zum Beispiel zu dessen Düse oder Wand an der inneren Aussparung. In dem Ventilkörper kann eine Düse angeordnet sein, wobei die innere Aussparung dann auch eine Öffnung in der Düse für den Gaseinlass darstellt, die mit dem Haupt- und dem Bypasskanal verbunden ist, und der Stößel innerhalb dieser Öffnung in die Düse gedrückt werden und mindestens einen der Kanäle an dem entsprechenden Sitz abdichten kann.

Die Ventilvorrichtung kann prinzipiell auch für eine Zuführeinheit, eine natürliche Anwendung und Druckregelungsvorrichtungen und allgemein für verschiedene andere Anwendungen als Brennstoffsysteme verwendet werden, zum Beispiel für Konzepte zur Dosierung der Massenströmung eines Fluids oder zur Aufteilung von Strömungen oder für zwei verschiedene Funktionen auf Grundlage eines Lastzustands.

Gemäß einer Ausführungsform der Erfindung hat der Ventilkörper einen ersten Bypasssitz an dem Gas-(zum Beispiel Wasserstoff-)Einlass und einen zweiten Bypasssitz an dem Eingang zu dem Bypasskanal, wobei der eingeführte Stößel einen Zwischenraum zwischen dem Stößel und dem Ventilkörper an einem Weg zwischen dem ersten Bypasssitz und dem zweiten Bypasssitz bereitstellt.

Gemäß einer Ausführungsform der Erfindung kann der Stößel bis auf ein vordefiniertes Mindestniveau gehoben werden, bei dem der Hauptkanal geschlossen bleibt und Gas mit einer vordefinierten Mindestmenge zwischen dem ersten Bypasssitz und dem zweiten Bypasssitz entlang des Zwischenraums strömen kann (Leckage).

Beim Heben des Stößels kann sich die Dichtung des Bypassdichtungselements etwas öffnen und eine Leckströmung in den Zwischenraum ermöglichen.

Gemäß einer Ausführungsform der Erfindung ist der Elektromagnet dazu ausgelegt, den Stößel in eine geringfügig geöffnete Position, eine mittlere geöffnete Position und eine vollständig geöffnete Position zu heben.

Gemäß einer Ausführungsform der Erfindung strömt das Gas (zum Beispiel Wasserstoff) in der geringfügig geöffneten Position entlang eines Zwischenraums zu dem Bypasskanal, strömt das Gas in der mittleren geöffneten Position entlang des Zwischenraums zu dem Bypasskanal und direkt zu dem Hauptkanal und strömt das Gas in der vollständig geöffneten Position direkt zu dem Bypasskanal und zu dem Hauptkanal.

In der vollständig geöffneten Position kann ein direkter Strömungsweg zu dem Bypasskanal und zu dem Hauptkanal bestehen und gibt es keine Leckströmung mehr.

Gemäß einer Ausführungsform der Erfindung verlaufen der Bypasskanal und der Hauptkanal durch eine Düse der Ventilvorrichtung.

Gemäß einer Ausführungsform der Erfindung ist das Hauptdichtungselement an einer Spitze des Stößels angeordnet und sind die Bypassdichtungselemente Ringe, die an einer Position des Stößels angeordnet sind, die dem Bypasssitz zugewandt ist, wenn er in die innere Aussparung eingeführt ist.

Die Ventilvorrichtung kann im vorstehend genannten Sinne ein Dosiervorrichtungsventil mit einer speziellen Düse mit Elastomerdichtung(en) an dem Stößel sein, die die Ventilsitze (zum Beispiel an der Düse) des Bypasskanals und des Hauptkanals abdichten können. Das Ventil kann in der Lage sein, verschiedene funktionelle Betriebsarten mit Wasserstoffströmung durch verschiedene Kanäle entsprechend der unterschiedlichen Energieversorgung von der ECU zu liefern, insbesondere einen Null-Füllzustand als Zustand ohne Energieversorgung an dem Elektromagneten, oder einen Vor-Füllzustand für das System durch Bereitstellen einer Leckage nur über einen Zwischenraum zu dem Bypasskanal, oder als Vor-Füll- plus Standard-Füllstufe mit einer Standard-Füllung zu dem Hauptkanal (zur Strahlpumpe) & mit einer kleinen Strömung (Leckage) zu dem Bypass, oder als Standard-Füllstufe mit vollem Öffnungsausmaß zu dem Hauptkanal und zu dem Bypass.

Die Erfindung betrifft ein Verfahren zum Betreiben einer Ventilvorrichtung, zum Beispiel für eine Wasserstoffstrahlpumpenvorrichtung in einer Brennstoffzellenanwendung, umfassend einen Schritt des Bereitstellens einer Ventilvorrichtung gemäß der Erfindung; des Empfangens von Informationen über eine erwünschte Gasströmung zu einem Brennstoffzellensystem; des Haltens des Elektromagneten ohne Energieversorgung und des Stößels in einer geschlossenen Position, wenn kein Gasbedarf besteht, oder der Versorgung des Elektromagneten mit Energie und des Bereitstellens einer Gasströmung durch den Bypasskanal und/oder durch den Hauptkanal.

Gemäß einer Ausführungsform der Erfindung wird der Elektromagnet bis auf ein vordefiniertes geringfügiges Niveau mit Energie versorgt und wird der Stößel in eine geringfügig geöffnete Position gehoben, so dass Gas (zum Beispiel Wasserstoff) entlang eines Zwischenraums zu dem Bypasskanal strömen kann.

Gemäß einer Ausführungsform der Erfindung wird der Elektromagnet bis auf ein vordefiniertes mittleres Niveau mit Energie versorgt und wird der Stößel in eine vordefinierte mittlere geöffnete Position gehoben, so dass Gas (zum Beispiel Wasserstoff) mit einer vordefinierten mittleren Menge entlang des Zwischenraums zu dem Bypasskanal und direkt zu dem Hauptkanal strömen kann.

Gemäß einer Ausführungsform der Erfindung wird der Elektromagnet bis auf ein vordefiniertes volles Niveau mit Energie versorgt und wird der Stößel in eine vordefinierte vollständig geöffnete Position gehoben, so dass Gas (zum Beispiel Wasserstoff) mit einer vordefinierten vollen Menge zu dem Bypasskanal und zu dem Hauptkanal strömen kann.

Die Ventilvorrichtung kann auch durch die Merkmale und Vorteile des Verfahrens zum Betrieb der Ventilvorrichtung gekennzeichnet sein und umgekehrt.

Weitere Merkmale und Vorteile von Ausführungsformen ergeben sich aus der folgenden Beschreibung mit Bezugnahme auf Figuren.

### Beschreibung der Figuren

Die Erfindung wird durch die Beschreibung der schematischen Figuren näher erläutert.
Fig. 1a zeigt eine schematische Ansicht einer Ventilvorrichtung gemäß einer Ausführungsform der Erfindung;
Fig. 1b zeigt eine vergrößerte schematische Ansicht einer Ventilvorrichtung gemäß Fig. 1;
Fig. 2 zeigt eine schematische Ansicht einer Ventilvorrichtung gemäß einer Ausführungsform der Erfindung in geschlossenem Zustand;
Fig. 3 zeigt eine schematische Ansicht einer Ventilvorrichtung gemäß einer Ausführungsform der Erfindung in einem ersten offenen Zustand;
Fig. 4 zeigt eine schematische Ansicht einer Ventilvorrichtung gemäß einer Ausführungsform der Erfindung in einem zweiten offenen Zustand;
Fig. 5 zeigt eine schematische Ansicht einer Ventilvorrichtung gemäß einer Ausführungsform der Erfindung in einem dritten offenen Zustand;
Fig. 5a zeigt eine schematische Ansicht einer Ventilvorrichtung gemäß einer Ausführungsform der Erfindung in allgemeiner Ansicht;
Fig. 6 zeigt ein Diagramm von Betriebsstufen der Ventilvorrichtung gemäß den Ausführungsformen der Erfindung; und
Fig. 7 zeigt ein Systemlayout der Anodenseite eines Brennstoffzellensystems mit einer Ventilvorrichtung gemäß einer Ausführungsform der Erfindung.

In den Figuren sind gleiche oder sich entsprechende Elemente mit den gleichen Bezugszahlen bezeichnet.

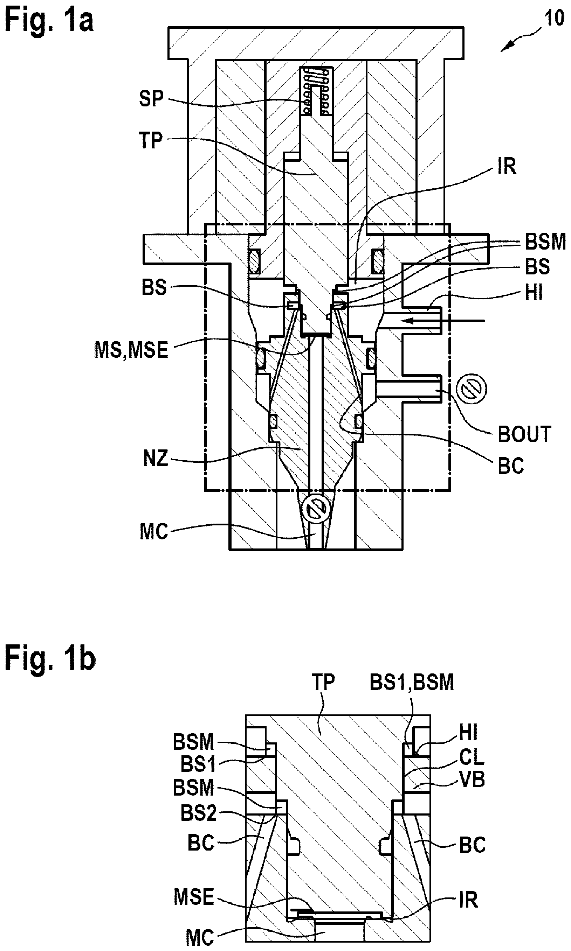

Fig. 1a zeigt eine schematische Ansicht einer Ventilvorrichtung gemäß einer Ausführungsform der Erfindung.

In Fig. 1a ist eine allgemeine Ansicht der Ventilvorrichtung 10 in geschlossenem Zustand gezeigt. In diesem Zustand kann Wasserstoff durch den Wasserstoffeinlass HI einströmen, jedoch schließt das Ventil 10 alle Kanäle, so dass kein oder im Wesentlichen kein Wasserstoff durch den Hauptkanal MC und durch den Bypasskanal BC strömt.

Die Ventilvorrichtung 10 umfasst einen Hauptkanal MC und mindestens einen Bypasskanal BC innerhalb eines Ventilkörpers, beispielsweise innerhalb einer Düse NZ, sich erstreckend von einer inneren Aussparung IR in dem Ventilkörper und in der Düse NZ aus, und einen Hauptsitz MS an einem Eingang zu dem Hauptkanal MC und einen Bypasssitz BS an einem Eingang zu dem Bypasskanal BC von der inneren Aussparung IR (der Düse) aus oder an einem Wasserstoffeinlass zu dem Ventilkörper, wobei der Hauptsitz MS und der Bypasssitz BS an der inneren Aussparung IR und in einem vordefinierten Abstand zueinander entlang der inneren Aussparung IR angeordnet sind. Ferner umfasst die Ventilvorrichtung 10 einen Stößel TP, der in die innere Aussparung IR als Öffnung in der Düse einführbar ist, und ein Hauptdichtungselement MSE, das an dem Stößel TP an einer Position angeordnet ist, die dem Hauptsitz MS zugewandt ist und dazu ausgelegt ist, den Hauptsitz MS zu schließen, wenn der Stößel zu dem Hauptsitz MS gedrückt wird, und mindestens ein Bypassdichtungselement BSM, das an dem Stößel TP an einer Position angeordnet ist, die dem Bypasssitz BS zugewandt ist und dazu ausgelegt ist, den Bypasssitz BS zu schließen, wenn der Stößel zu dem Bypasssitz BS gedrückt wird, wobei der Stößel beim Einführen in die innere Aussparung IR einen vordefinierten Zwischenraum zwischen dem Stößel TP und dem Ventilkörper VB (Innenseite der Düse) zwischen dem Einlass des Wasserstoffs in den Ventilkörper VB und dem Bypasssitz BS und/oder zwischen zwei Bypasssitzen BS bereitstellt; und eine Feder SP, die an einem Ende des Stößels TP angeordnet ist und dazu ausgelegt ist, den Stößel TP in Richtung des Hauptsitzes MS zu drücken, und einen Elektromagneten E, der dazu ausgelegt ist, den Stößel TP gegen eine Federkraft in verschiedene Stufen zu ziehen, wenn er mit Energie versorgt wird. Der Bypasskanal BC kann zu einem Bypassausgang BOUT führen.

Fig. 1b zeigt eine vergrößerte schematische Ansicht einer Ventilvorrichtung gemäß Fig. 1.

Der Stößel TP mit dem Hauptdichtungselement MSE an seinem Spitzenbereich kann in Richtung des Eingangs des Hauptkanals MC gedrückt werden und den Eingang des Hauptkanals MC so abdichten, dass eine Wasserstoffströmung zu dem Hauptkanal MC im Wesentlichen vermieden werden kann. In dieser Position des Stößels TP können die Bypassdichtungselemente BSM, zum Beispiel O-Ringe, an dem oberen ersten Bypasssitz BS1 und an dem unteren (zweiten) Bypasssitz BS2 die Wasserstoffströmung abdichten. Mit anderen Worten, das Bypassdichtungselement BSM an dem oberen ersten Bypasssitz BS1 kann den Wasserstoff von dem Wasserstoffeinlass HI blockieren, so dass er nicht in den Zwischenraum CL zwischen den beiden Bypasssitzen BS1 und BS2 gelangt (und sich entlang des Stößels zwischen ihnen und zwischen dem Stößel und dem Ventilkörper VB erstreckt). Außerdem kann das Bypassdichtungselement BSM an dem unteren zweiten Bypasssitz BS2 den Wasserstoff daran hindern, in den/die Bypasskanal/kanäle BC (zu dem Kanaleingang ET) zu strömen.

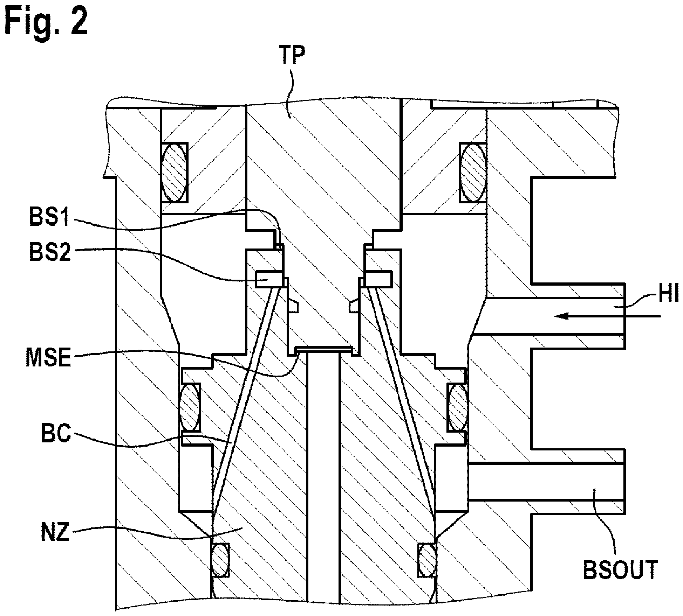

Fig. 2 zeigt eine schematische Ansicht einer Ventilvorrichtung gemäß einer Ausführungsform der Erfindung in geschlossenem Zustand.

In Fig. 2 ist eine vergrößerte Ansicht des Innenbereichs der Düse mit den Kanälen MC und BC, den Dichtungselementen BSM sowie dem Wasserstoffeinlass HI und dem Bypassausgang BSOUT gemäß Fig. 1a im geschlossenen Zustand. In dieser Stufe (Nullbefüllung) wird der Elektromagnet nicht mit Energie versorgt und drückt die Feder auf den Stößel und dichten die Elastomerdichtungen alle Ventilsitze an der Düse ab.

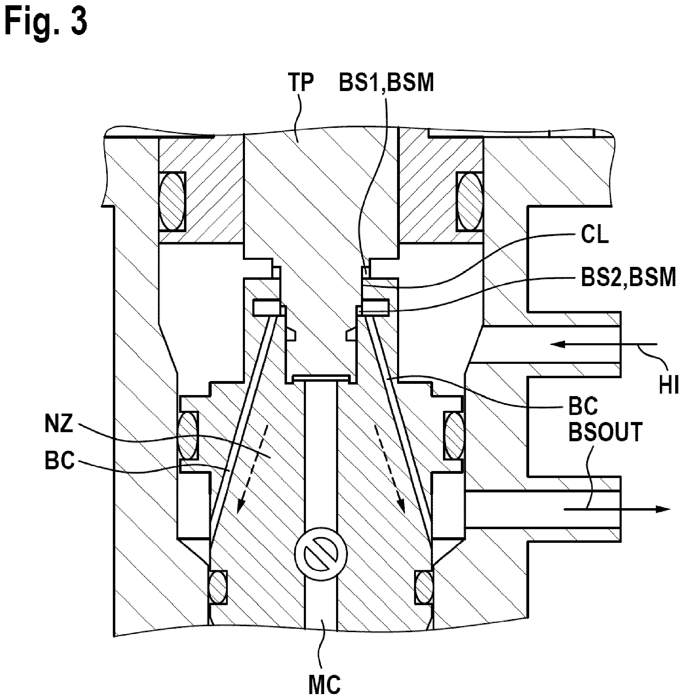

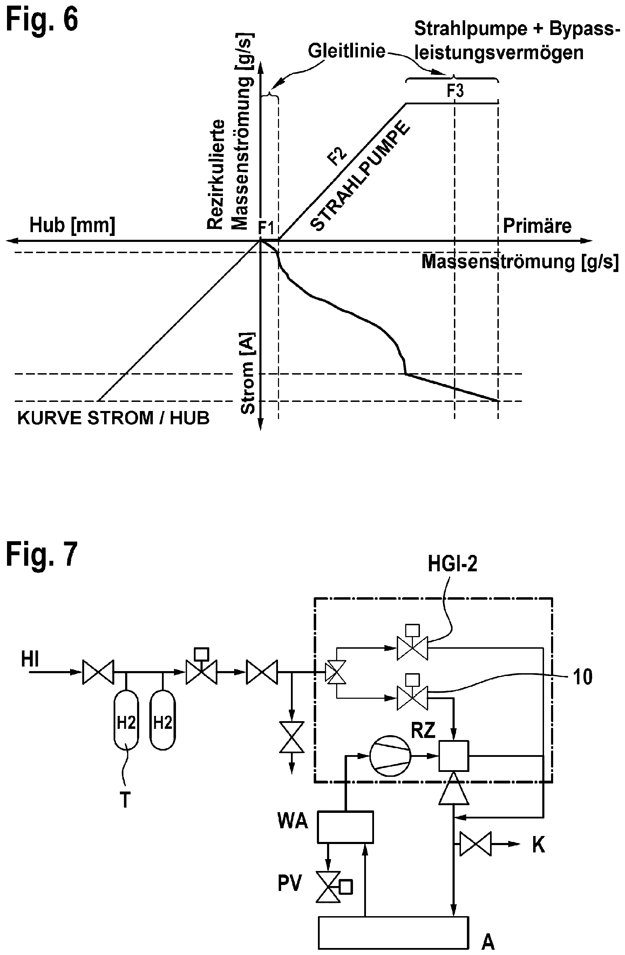

Fig. 3 zeigt eine schematische Ansicht einer Ventilvorrichtung gemäß einer Ausführungsform der Erfindung in einem ersten offenen Zustand. Gezeigt ist der Zustand F1 gemäß Fig. 6.

Der Elektromagnet wird bis auf ein vordefiniertes Mindestniveau mit Energie versorgt und der Stößel TP kann von dem Hauptsitz nach oben (oder zumindest gegen die Federkraft) in eine geringfügig geöffnete Position gehoben werden. Dies entspricht einer sogenannten Vorfüllstufe, die den Hauptkanal nicht für die Wasserstoffströmung öffnet (zumindest nicht in wesentlichem Umfang) und nur eine geringe Wasserstoffströmung durch Leckage entlang des Zwischenraums CL von dem ersten Bypasssitz BS1 und dem zweiten Bypasssitz BS2 zum Eingang zu dem Bypasskanal und weiter zu dem Bypassausgang BOUT auslöst. Der Elektromagnet kann mit einem niedrigen Stromwert mit Energie versorgt werden und der Stößel TP beginnt sich nach oben zu bewegen und öffnet den ersten Bypasssitz BS1 an dem Wasserstoffeinlass HI und den zweiten Bypasssitz BS2 an dem Bypasskanal, während der Ventilsitz des Hauptkanals MC noch abgedichtet ist. Durch den kontrollierten Zwischenraum CL zwischen der Düse NZ (dem Ventilkörper) und dem Stößel TP ist es möglich, durch die Bypasskanäle eine geringe Menge an Wasserstoff zu liefern, die zur Aktivierung des Brennstoffzellensystems nützlich ist, und eine Vorfüllmassenströmung kann durch den Stößelhub (basierend auf der Dichtungskonstruktion und dem Stromwert), die Bypasskanäle (Anzahl und Durchmesser) und durch die Größe des Zwischenraums CL zwischen dem Stößel TP und der Düse NZ bestimmt werden. Mit anderen Worten, die Bypassdichtungselemente BSM lassen eine geringe Wasserstoffmenge strömen, während das Hauptdichtungselement MSE den Hauptkanal geschlossen/abgedichtet hält.

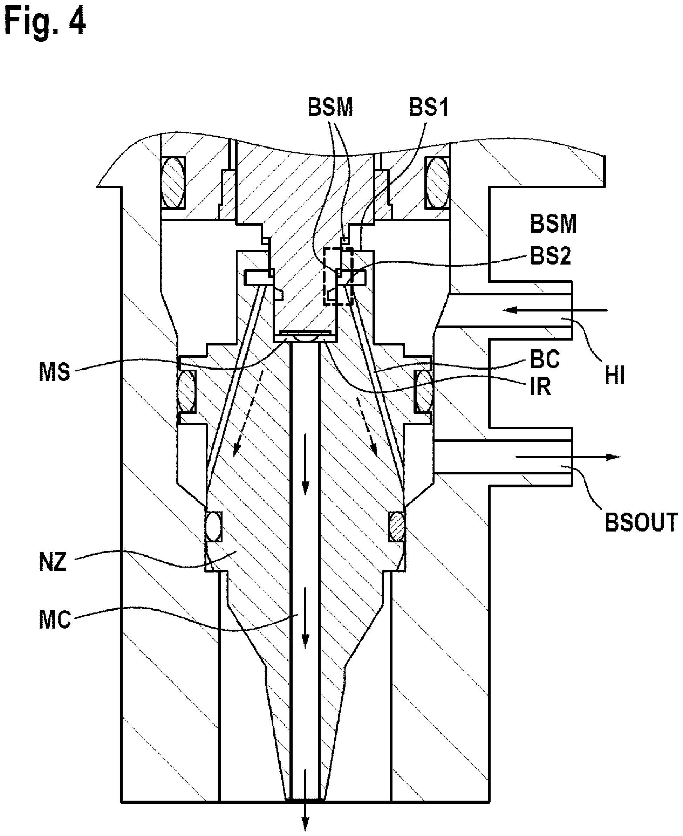

Fig. 4 zeigt eine schematische Ansicht einer Ventilvorrichtung gemäß einer Ausführungsform der Erfindung in einem zweiten offenen Zustand. Der Zustand F2 gemäß Fig. 6 ist gezeigt.

Fig. 4 zeigt auch die Spitze der Düse NZ, durch die der Hauptkanal MC verläuft. In der in Fig. 4 gezeigten Stufe wird der Elektromagnet stärker mit Energie versorgt und öffnet sich der Stößel TP weiter in eine mittlere geöffnete Position. In dieser Position hebt sich auch das Hauptdichtungselement MSE und lässt eine definierte Strömung zu dem Hauptkanal zu. In dieser Stufe kann auch die Strömung zwischen dem ersten Bypasssitz BS1 und dem zweiten Bypasssitz BS2 entlang der Leckage vorhanden sein (wie in Fig. 3). Die Stufe gemäß Fig. 4 entspricht einer sogenannten Standardbefüllung durch eine Strahlpumpe, bei der der Elektromagnet mit einem mittleren Stromwert mit Energie versorgt werden kann und der Stößel beginnt, sich weiter nach oben zu bewegen und den Hauptkanalsitz MS zu öffnen, und die Strahlpumpe beginnt, Wasserstoff durch das Mischrohr (den Hauptkanal) in den Stapel zu fördern. Die Strömung durch den Zwischenraum zwischen dem Stößel und der Düse wird ferner als Vorfüllung gewährleistet.

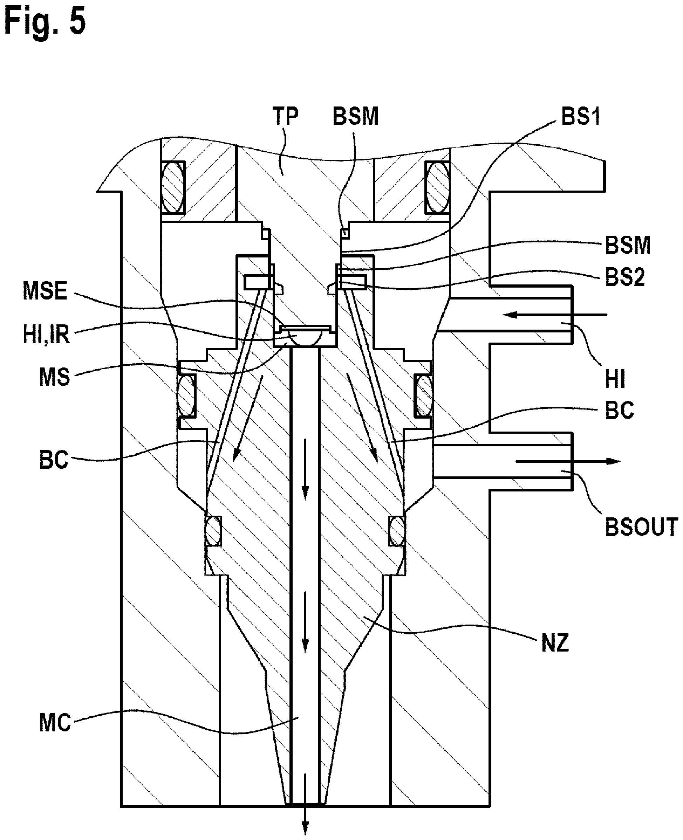

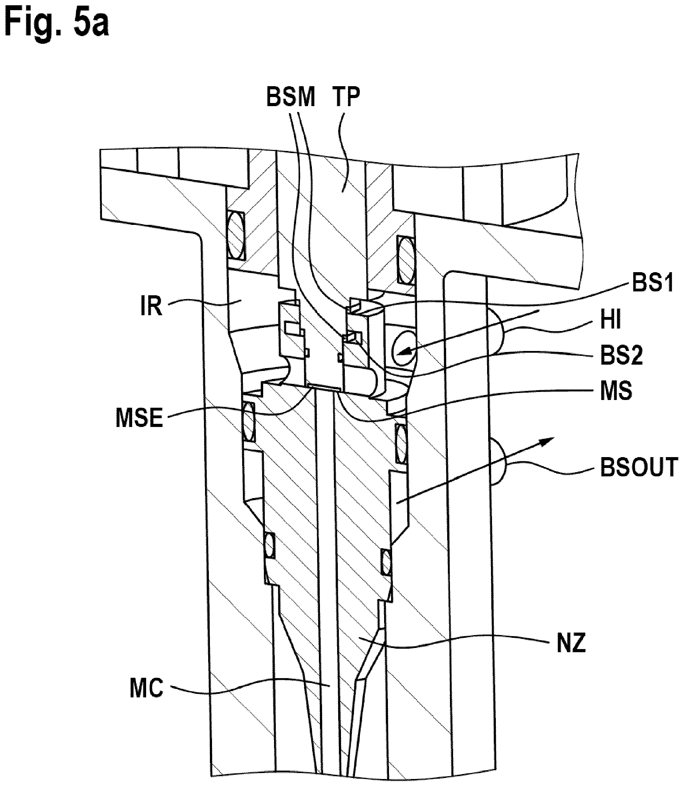

Fig. 5 zeigt eine schematische Ansicht einer Ventilvorrichtung gemäß einer Ausführungsform der Erfindung in einem dritten offenen Zustand. Der Zustand F3 gemäß Fig. 6 ist gezeigt.

Die Stufe gemäß Fig. 5 kann eine zusätzliche Massenströmung durch den BSOUT-Kanal und durch den Hauptkanal MC bereitstellen, so dass der Elektromagnet mit einem hohen Stromwert mit Energie versorgt werden kann. Der Hauptkanal liefert immer noch Wasserstoff durch das Mischrohr in den Stapel, und die Umleitung in dieser Stufe ist keine Leckage mehr, sondern eine vordefinierte Strömung bei vollständig geöffnetem Stößel und maximalem Stromwert. Wenn der Stößel TP seinen maximalen Hub erreicht hat, vergrößert sich der Zwischenraum zwischen dem Stößel TP und der Düse NZ, und eine zusätzliche Wasserstoffmassenströmung kann auch durch den Bypasskanal zu dem Stapel gelangen.

Fig. 5a zeigt eine schematische Ansicht einer Ventilvorrichtung gemäß einer Ausführungsform der Erfindung in allgemeiner Ansicht.

Die Ventilvorrichtung ist aus einem Hauptkanal MC und mindestens einem Bypasskanal (nicht dargestellt) innerhalb eines Ventilkörpers gebildet, zum Beispiel innerhalb einer Düse NZ.

Die Düse NZ kann sich an einer festen Position innerhalb des Ventils befinden und hat eine Öffnung zur Aufnahme von Gas und dem Stößel TP und hat einen Hauptsitz MS an einem Eingang zu dem Hauptkanal MC und einen Bypasssitz BS an einem Eingang zu dem Bypasskanal BC, wobei der Hauptsitz MS und der Bypasssitz BS in einem vordefinierten Abstand zueinander angeordnet sind.

Ferner umfasst die Ventilvorrichtung 10 einen Stößel TP, der in die innere Aussparung der Düse (deren Öffnung) einführbar ist, und ein Hauptdichtungselement MSE, das an dem Stößel TP an einer dem Hauptsitz MS zugewandten Position angeordnet ist und dazu ausgelegt ist, den Hauptsitz MS zu schließen, wenn der Stößel zu dem Hauptsitz MS gedrückt wird, und mindestens ein Bypassdichtungselement BSM, das an dem Stößel TP an einer dem Bypasssitz BS zugewandten Position angeordnet ist und dazu ausgelegt ist, den Bypasssitz BS zu schließen, wenn der Stößel zu dem Bypasssitz BS gedrückt wird, wobei der Stößel einen vorgegebenen Zwischenraum zwischen dem Stößel TP und dem Ventilkörper VB (Düse) zwischen dem Einlass des Wasserstoffs in den Ventilkörper VB und dem Bypasssitz BS und/oder zwischen zwei Bypasssitzen BS bereitstellt.

Fig. 6 zeigt ein Diagramm von Betriebsstufen der Ventilvorrichtung gemäß den Ausführungsformen der Erfindung.

In Fig. 6 wird im Uhrzeigersinn im ersten Quadranten des Diagramms die Strömungskennlinie einer Strahlpumpe, im zweiten Quadranten des Diagramms die Ventilstromkennlinie in Bezug auf den Primärstrom und im dritten Quadranten die Stößelbewegungskennlinie in Bezug auf den Strom erläutert.

Im 1. Quadranten: F1 zeigt die Vorfüllstufe an, in der das Ventil nur eine Leckströmung durch den Bypasskanal BC in das System zulässt. F2 zeigt die Strömung von Wasserstoff in den Hauptkanal zusammen mit der Leckströmung in den BC-Kanal an (um die Standard-Strömungskennlinie der Stahlpumpe zu erfüllen). F3 zeigt schließlich die Wasserstoffströmung aus dem Hauptkanal wie in der Funktion F2 zusätzlich zu der Bypasströmung bei voller Öffnung an.

Fig. 7 zeigt ein Systemlayout der Anodenseite A eines Brennstoffzellensystems. Der Wasserstoff gelangt aus den Tanks T in den Hauptkreislauf. In diesem Zweig können weitere Ventile, zum Beispiel ein Absperrventil, Druckminderungsventile und Überdruckventile, hinzugefügt werden. Ein System gemäß der Erfindung hat nur die Ventilvorrichtung 10, die zwischen den Wasserstoffeinlass und den Rezirkulationsgebläse/Rezirkulationskreislauf geschaltet ist, während ein System gemäß dem Stand der Technik typischerweise ein zusätzliches HGI (gekennzeichnet als HGI-2) benötigen würde (zum Beispiel ohne Düse für den Bypasskanal), was jedoch bei Verwendung der Erfindung vermieden werden kann (nur in leichten Linien dargestellt). Der Rezirkulationsweg kann mit der Anode A verbunden sein, und darin können ein Spülventil PV, ein Wasserabscheider WA und eine Verbindung zur Kathode K enthalten sein.

Die Erfindung ist nicht auf die gezeigten Ausführungsformen beschränkt, sondern kann im Rahmen der Erfindung auf verschiedene Weise modifiziert werden.

## Patentansprüche

1. Ventilvorrichtung (10), umfassend:
- einen Hauptkanal (MC) und mindestens einen Bypasskanal (BC) innerhalb eines Ventilkörpers (VB), sich erstreckend von einer inneren Aussparung (IR) in dem Ventilkörper (VB) aus, und einen Hauptsitz (MS) an einem Eingang zu dem Hauptkanal (MC) und einen Bypasssitz (BS) an einem Eingang zu dem Bypasskanal (BC) von der inneren Aussparung aus (IR) oder an einem Gaseinlass in den Ventilkörper (VB), wobei der Hauptsitz (MS) und der Bypasssitz (BS) an der inneren Aussparung (IR) und in einem vordefinierten Abstand zueinander entlang der inneren Aussparung (IR) angeordnet sind;
- einen Stößel (TP), der in die innere Aussparung (IR) einführbar ist, und ein Hauptdichtungselement (MSE), das an dem Stößel (TP) an einer Position angeordnet ist, die dem Hauptsitz (MS) zugewandt ist, und dazu ausgelegt ist, den Hauptsitz (MS) zu schließen, wenn der Stößel zu dem Hauptsitz (MS) gedrückt wird, und mindestens ein Bypassdichtungselement (BSM), das an dem Stößel (TP) an einer Position angeordnet ist, die dem Bypasssitz (BS) zugewandt ist, und dazu ausgelegt ist, den Bypasssitz (BS) zu schließen, wenn der Stößel zu dem Bypasssitz (BS) gedrückt wird, wobei der Stößel, wenn er in die innere Aussparung (IR) eingeführt ist, einen vordefinierten Zwischenraum zwischen dem Stößel (TP) und dem Ventilkörper (VB) zwischen dem Einlass des Gases in den Ventilkörper (VB) und dem Bypasssitz (BS) und/oder zwischen zwei Bypasssitzen (BS) bereitstellt; und
- eine Feder (SP), die an einem Ende des Stößels (TP) angeordnet und dazu ausgelegt ist, den Stößel (TP) in Richtung des Hauptsitzes (MS) zu drücken, und einen Elektromagneten, der dazu ausgelegt ist, den Stößel (TP) gegen eine Federkraft in verschiedenen Stufen zu ziehen, wenn er mit Energie versorgt wird.

2. Ventilvorrichtung (10) nach Anspruch 1, wobei der Ventilkörper (VB) einen ersten Bypasssitz (BS1) an dem Gaseinlass und einen zweiten Bypasssitz (BS2) an dem Eingang zu dem Bypasskanal (BC) aufweist und wobei der eingeführte Stößel (TP) einen Zwischenraum zwischen dem Stößel (TP) und dem Ventilkörper (VB) auf einem Weg zwischen dem ersten Bypasssitz (BS1) und dem zweiten Bypasssitz (BS2) bereitstellt.

3. Ventilvorrichtung (10) nach Anspruch 2, wobei der Stößel (TP) bis auf ein vordefiniertes Mindestniveau gehoben werden kann, bei dem der Hauptkanal (MC) geschlossen bleibt und Gas mit einer vordefinierten Mindestmenge zwischen dem ersten Bypasssitz (BS1) und dem zweiten Bypasssitz (BS2) entlang des Zwischenraums strömen kann.

4. Ventilvorrichtung (10) nach einem der Ansprüche 1 bis 3, wobei der Elektromagnet dazu ausgelegt ist, den Stößel (TP) in eine geringfügig geöffnete Position, in eine mittlere geöffnete Position und in eine vollständig geöffnete Position zu heben.

5. Ventilvorrichtung (10) nach Anspruch 4, wobei in der geringfügig geöffneten Position Gas entlang eines Zwischenraums zu dem Bypasskanal strömt und in der mittleren geöffneten Position Gas entlang des Zwischenraums zu dem Bypasskanal und direkt zu dem Hauptkanal strömt und in der vollständig geöffneten Position Gas direkt zu dem Bypasskanal und zu dem Hauptkanal strömt.

6. Ventilvorrichtung (10) nach einem der Ansprüche 1 bis 5, wobei der Bypasskanal (BC) und der Hauptkanal (MC) durch eine Düse der Ventilvorrichtung (10) verlaufen.

7. Ventilvorrichtung (10) nach einem der Ansprüche 1 bis 6, wobei das Hauptdichtungselement (MSE) an einer Spitze des Stößels (TP) angeordnet ist und das Bypassdichtungselement (BSM) ein Ring ist, der an einer Position des Stößels (TP) angeordnet ist, die dem Bypasssitz (BS) zugewandt ist, wenn er in die innere Aussparung (IR) eingeführt ist.

8. Verfahren zum Betreiben einer Ventilvorrichtung (10) mit den folgenden Schritten:
- Bereitstellen einer Ventilvorrichtung (10) nach einem der Ansprüche 1 bis 7;
- Empfangen von Informationen über eine erwünschte Gasströmung;
- Halten des Elektromagneten ohne Energieversorgung und des Stößels (TP) in einer geschlossenen Position, wenn kein Gasbedarf besteht, oder Versorgen des Elektromagneten mit Energie und Bereitstellen einer Gasströmung durch den Bypasskanal (BC) und/oder durch den Hauptkanal (MC).

9. Verfahren nach Anspruch 8, wobei der Elektromagnet bis auf ein vordefiniertes geringfügiges Niveau mit Energie versorgt wird und der Stößel in eine geringfügig geöffnete Position gehoben wird, so dass Gas entlang eines Zwischenraums zu dem Bypasskanal strömen kann.

10. Verfahren nach Anspruch 8, wobei der Elektromagnet bis auf ein vordefiniertes mittleres Niveau mit Energie versorgt wird und der Stößel in eine vordefinierte mittlere geöffnete Position gehoben wird, so dass Gas mit einer vordefinierten mittleren Menge entlang des Zwischenraums zu dem Bypasskanal und direkt zu dem Hauptkanal strömen kann.

11. Verfahren nach Anspruch 8, wobei der Elektromagnet bis auf ein vordefiniertes volles Niveau mit Energie versorgt wird und der Stößel in eine vordefinierte vollständig geöffnete Position gehoben wird, so dass Gas mit einer vordefinierten vollen Menge zu dem Bypasskanal und zu dem Hauptkanal strömen kann.
